# EUROPEAN PATENT SPECIFICATION

(11) **EP 2 607 102 B1**
(45) Date of publication and mention of the grant of the patent: **14.09.2016**
(21) Application number: 12197591.6
(22) Date of filing: 17.12.2012
(51) Int. Cl.: B60C 1/00, C08C 19/20, C08F 299/00, C08L 51/04

(54) **METHOD OF MAKING A GRAFT POLYMER, COPOLYMER AND TIRE**
VERFAHREN ZUR HERSTELLUNG EINES PFROPFCOPOLYMERS, IN DIESEM VERFAHREN GEWONNENES PFROPFCOLYMER UND REIFEN
PROCÉDÉ DE FABRICATION DE POLYMÈRE GREFFÉ, POLYMÈRE GREFFÉ OBTENU GRÂCE À CE PROCÉDÉ ET PNEUMATIQUE

(30) Priority: 21.12.2011 US 201113332837; 21.12.2011 US 201113332749; 21.12.2011 US 201113332535
(43) Date of publication of application: 26.06.2013
(73) Proprietor: The Goodyear Tire & Rubber Company, Akron, OH 44316-0001 (US)
(72) Inventor: Mruk, Ralf, L-9164 Lipperscheid (LU); Schmitz, Frank, L-7782 Bissen (LU); Roskamp, Robert Fokko, D-54294 Trier (DE); Hermann, Alexandra, D-55116 Mainz (DE); Zentel, Rudolf Wilhelm, D-55283 Nierstein (DE)
(74) Representative: Kutsch, Bernd

(56) References cited:
- EP-A1- 2 345 679
- EP-A2- 0 181 485
- DE-A1- 10 254 432
- HERIBERT DECHER ET AL: "New amphiphilic poly(butadiene)-graft-poly(ethylene oxide)s", POLYMER INTERNATIONAL, vol. 38, no. 3, 1 November 1995 (1995-11-01), pages 219-225, XP055053175, ISSN: 0959-8103, DOI: 10.1002/pi.1995.210380301
- WEN-FU LEE ET AL: "Graft copolymerization ofN-isopropylacrylamide on styrene-butadiene-styrene block copolymer", JOURNAL OF APPLIED POLYMER SCIENCE, vol. 82, no. 11, 9 December 2001 (2001-12-09), pages 2641-2650, XP055053176, ISSN: 0021-8995, DOI: 10.1002/app.2117
- GUOWEI WANG ET AL: "Investigation of thiol-ene addition reaction on poly(isoprene) under UV irradiation: Synthesis of graft copolymers with "V"-shaped side chains", JOURNAL OF POLYMER SCIENCE PART A: POLYMER CHEMISTRY, vol. 48, no. 17, 1 September 2010 (2010-09-01), pages 3797-3806, XP055052984, ISSN: 0887-624X, DOI: 10.1002/pola.24164

## Description

### Background of the Invention

Aqueous solutions of a variety of polar aprotic polymers exhibit a lower critical solution temperature (LCST). When these solutions are heated above the LCST, the intramolecular hydrogen bonding is preferred compared to the hydrogen bonding with water molecules. This leads to collapse of the polymer coils and a precipitation of the polymer from solution. This phase transition is reversible so that the polymer redissolves when the temperature is again decreased below the LCST. A well-known example for an LCST polymer is poly(N-isopropyl acrylamide) (PNIPAM). Aqueous solutions of this polymer exhibit an LCST transition at about 33 °C.

The combination of LCST polymers with elastomers offers the possibility of better control of elastomer performance in a variety of applications where the elastomer is exposed to water. Simple mixing of an LCST polymer with an elastomer results in a compound that will experience macrophase separation due to the lack of covalent bonds between the LCST polymer and the elastomer. Such a macrophase separation will most likely have a detrimental effect on compound performance.

There is therefore a need for a polymer having both elastomeric and LCST properties.

WEN-FU LEE et al.:"Graft copolymerization of N-isopropylacrylamide on styrene-butadiene-styrene block copolymer", Journal of Applied Polymer Science, Vol. 82, No. 11, pages 2641 to 2650, describes a graft copolymerization of N-isopropylacrylamide on styrene-butadiene-styrene block copolymer.

EP-A-2 345 679 describes the use of diene graft polymers in tires in order to improve for instance wear resistance.

GUOWEI WANG et al.:"Investigation of thiol-ene addition reaction of poly(isoprene) under UV irradiation: Synthesis of graft copolymers with "V"-shaped side chains", Journal of Polymer Science, Part A: Polymer Chemistry, Vol. 48, No. 17, pages 3797 to 3806 describes a polyisoprene base polymer to which graft are connected via a thiolether functional group.

### Summary of the Invention

The invention relates to a method of making a graft polymer in accordance with claim 1, a copolymer in accordance with claim 3 and to a tire in accordance with claim 9.

Dependent claims refer to preferred embodiments of the invention.

In one aspect, the present invention is directed to a method of making a graft copolymer, comprising the steps of:
obtaining a first polymer comprising at least one carbon-carbon double bond, the first polymer derived from at least one monomer, the at least one monomer comprising a conjugated diene monomer;
obtaining a second polymer, the second polymer capable of exhibiting a lower critical solution temperature (LCST) and comprising a terminal functional group capable of reacting with the carbon-carbon double bond;
reacting the second polymer with the first polymer to form a graft copolymer, the graft copolymer comprising a backbone derived from the first polymer and sidechains derived from the second polymer.

The invention is further directed to a copolymer comprising: a polymeric backbone chain derived from a monomer comprising at least one conjugated diene monomer and optionally at least one vinyl aromatic monomer; and polymeric sidechains bonded to the backbone chain, the sidechains comprising a polymer capable of exhibiting a lower critical solution temperature (LCST).

The invention is further directed to a pneumatic tire having a tread, the tread comprising a rubber composition comprising:
a copolymer comprising a polymeric backbone chain derived from a monomer comprising at least one conjugated diene monomer and optionally at least one vinyl aromatic monomer; and polymeric sidechains bonded to the backbone chain, the sidechains comprising a polymer capable of exhibiting a lower critical solution temperature (LCST);
optionally, at least one additional diene based elastomer; and
a filler selected from the group consisting of carbon black and silica.

In accordance with the present invention, the second polymer is a polymer of a N-substituted acrylamide derivative; or
the second polymer is of the formula: 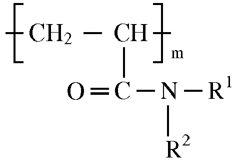 where R¹ and R² are independently selected from the group consisting of hydrogen, a C2 to a C6 linear alkyl, a C2 to a C6 branched alkyl, and a C3 to a C6 cycloalkyl, with the proviso that at least one of R¹ and R² is not hydrogen, and m is the degree of polymerization of the hydrocarbon chain.

In a preferred aspect of the method in accordance with the present invention, the thiocarbonylthio RAFT agent may be selected from the group consisting of trithiocarbonate RAFT agents, dithioester RAFT agents, xanthate RAFT agents, and dithiocarbamate RAFT agents.

In a preferred aspect of the method in accordance with the present invention, the thiocarbonylthio RAFT chain transfer agent may be selected from the group consisting of S-1-dodecyl-S-(αα'-dimethyl-α"-acetic acid) trithiocarbonate, and 4-cyano-4-dodecylsulfanylthiocarbonylsulfanyl-4-methyl butyric acid.

In a preferred aspect of the method in accordance with the present invention, the at least one first monomer may further comprise a vinyl aromatic monomer such as styrene.

In a preferred aspect of the method in accordance with the present invention, the conjugated diene monomer may be selected from the group consisting of butadiene and isoprene.

In a preferred aspect of the method in accordance with the present invention, the terminal thiocarbonylthio group may be cleaved by aminolysis.

In a preferred aspect of the method in accordance with the present invention, the step of reacting the second polymer with the first polymer may be conducted in the presence of a free-radical initiator, preferably a free-radical initiator selected from the group consisting of 2,4,6-trimethylbenzoyldiphenylphosphine oxide and azobisisobutyronitrile.

In a preferred aspect of the method in accordance with the present invention, the polymer capable of exhibiting a lower critical solution temperature has a lower critical solution temperature in a range of from 0°C to 100°C.

### Brief Description of the Drawings

Figure 1 shows the ¹H-NMR spectrum of a styrene-butadiene elastomer.
Figure 2 shows the UV-vis spectrum of a styrene-butadiene elastomer before and after the reaction with 2-mercaptonaphtaline and the spectrum of the pure thiol.
Figure 3 shows the UV-vis spectrum of a styrene-butadiene elastomer before and after the reaction with 2-mercaptonaphtaline and the spectrum of the pure thiol.
Figure 4 shows the ¹H-NMR spectrum of a styrene-butadiene elastomer before and after reaction with a thiol in the presence of different initiators.
Figure 5 shows a GPC-measurement for a styrene-butadiene elastomer, and the elastomer functionalized with a thiol in the presence of different initiators.
Figure 6 shows UV-VIS spectra of a trithiocarbonate RAFT chain transfer agent, PNIPAM with a trithiocarbonate-end group and PNIPAM with a thiol group.
Figure 7 shows transmission measurement of turbidity versus temperature for several PNIPAM polymers with CTA endgroups.
Figure 8 shows the ¹H-NMR spectrum of a styrene-butadiene elastomer and of a styrene-butadiene elastomer functionalized with PNIPAM.
Figure 9 shows GPC curves for a styrene-butadiene elastomer and for three PNIPAM-functionalized styrene-butadiene elastomers.
Figure 10 shows contact angle as a function of PNIPAM content of PNIPAM functionalized styrene-butadiene elastomer.
Figure 11 shows the relative difference in contact angle above and below the LCST for PNIPAM functionalized styrene-butadiene elastomer.
Figure 12 shows rheological properties as a function of temperature for a styrene-butadiene elastomer.
Figure 13 shows rheological properties as a function of temperature for a graft copolymer of styrene-butadiene and PNIPAM, with 6 percent PNIPAM.
Figure 14 shows rheological properties as a function of temperature for a graft copolymer of styrene-butadiene and PNIPAM, with 4 percent PNIPAM.

### Detailed Description

There is disclosed a method of making a graft copolymer, comprising the steps of
obtaining a first polymer comprising at least one carbon-carbon double bond, the first polymer derived from at least one first monomer, the at least one first monomer comprising a conjugated diene monomer;
obtaining a second polymer, the second polymer capable of exhibiting a lower critical solution temperature (LCST) and comprising a terminal functional group capable of reacting with the carbon-carbon double bond;
reacting the second polymer with the first polymer to form a graft copolymer, the graft copolymer comprising a backbone derived from the first polymer and sidechains derived from the second polymer.

There is further disclosed a copolymer comprising: a polymeric backbone chain derived from a monomer comprising at least one conjugated diene monomer and optionally at least one vinyl aromatic monomer; and polymeric sidechains bonded to the backbone chain, the sidechains comprising a polymer capable of exhibiting a lower critical solution temperature (LCST).

There is further disclosed a pneumatic tire having a tread, the tread comprising a rubber composition comprising:
a copolymer comprising a polymeric backbone chain derived from a monomer comprising at least one conjugated diene monomer and optionally at least one vinyl aromatic monomer; and polymeric sidechains bonded to the backbone chain, the sidechains comprising a polymer capable of exhibiting a lower critical solution temperature (LCST);
optionally, at least one additional diene based elastomer; and
a filler selected from the group consisting of carbon black and silica.

It has now been found that rubber elastomers may be functionalized with side chains of LCST polymers to produce a graft copolymer with an elastomer backbone and LCST polymer sidechains. A convenient way for the functionalization of a variety of elastomers is the thiol-ene reaction during which alkene moieties being present in the elastomers are transformed into thioethers by reaction with thiols. This reaction proceeds preferably with vinyl groups as they are present in styrene-butadiene rubbers, butadiene rubbers, and polyisoprene rubbers. In order to allow the functionalization of the elastomers, the LCST polymers may feature thiol end groups. These can be introduced by reaction of thiocarbonylthio endgroups with nucleophilic agents. Polymers exhibiting thiocarbonylthio end groups can be produced by reversible addition-fragmentation chain transfer (RAFT) polymerization. One reaction scheme describes the use of PNIPAM as LCST polymer, however, this invention is not limited to that as any LCST polymer with a reactive end group, which for example can be produced by RAFT polymerization, can be used for the functionalization of the elastomer.

One step of the method to produce the graft copolymer is to obtain, a first polymer comprising at least one carbon-carbon double bond. In one embodiment, the first polymer comprising at least one carbon-carbon double bond is a diene based elastomer. The phrases "rubber or elastomer containing olefinic unsaturation" or "diene based elastomer" as used herein are equivalent and are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic rubbers are the homopolymerization products of butadiene and its homologues and derivatives, for example, methylbutadiene (i.e., isoprene), dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

A second step of the method is obtaining a second polymer, the second polymer capable of exhibiting a lower critical solution temperature (LCST) and comprising a terminal functional group capable of reacting with the carbon-carbon double bond of the first polymer.

By "capable of exhibiting a lower critical solution temperature (LCST)," it is meant that in the presence of water or in water, the second polymer associates with the water to form a water-swollen polymer phase, wherein the water-swollen polymer phase will show an LCST transition when heated from a temperature below the LCST to a temperature above the LCST. The second polymer is accordingly capable of exhibiting an LCST when the second polymer exists as a side chain on the graft copolymer.

Suitable second polymers include those capable of exhibiting a lower critical solution temperature. In one embodiment, the second polymer includes homopolymers and copolymers of various second monomers known to have LCST behavior, including but not limited to polymers of: acrylamides and substituted acrylamides, methacrylamides and substituted methacrylamids, acrylic acids and substituted acrylic acids, methacrylic acids and substituted methacrylic acids, vinyl alkyl ethers and substituted vinyl alkyl ethers, vinyl caprolactams and substituted vinyl caprolactams, and other monomers known to lead to polymers with LCST behavior, such as oligo(ethylene glycol) methacrylate and 2-(2-methoxyethoxy) ethyl methacrylate, and the like.

In one embodiment, the second polymer is a polymer of a second monomer of formula I 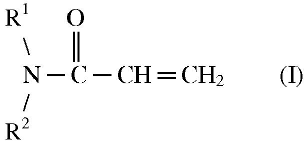 where R¹ and R² are independently selected from the group consisting of hydrogen, C1 to C6 linear alkyl, C2 to C6 branched alkyl, and C3 to C6 cycloalkyl, with the proviso that at least one of R¹ and R² is not hydrogen.

In one embodiment, the second polymer is of formula (II) 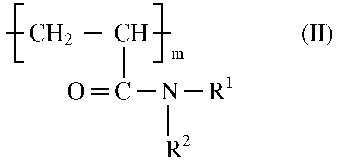 where R¹ and R² are independently selected from the group consisting of hydrogen, C1 to C6 linear alkyl, C2 to C6 branched alkyl, and C3 to C6 cycloalkyl, with the proviso that at least one of R¹ and R² is not hydrogen, and m is the degree of polymerization of the hydrocarbon chain.

In one embodiment, the second polymer is a polymer of an N-substituted acrylamide derivative.

In one embodiment, the second polymer is a polymer of N-isopropylacrylamide, N-cyclopropylacrylamide, or N, N-diethylacrylamide.

The second polymer includes a terminal function group capable of reacting with a carbon-carbon double bond of the first polymer. In one embodiment, the terminal functional group is a thiol group. Such a terminal functional group may be incorporated into the second polymer during polymerization, for example, through use of a suitable chain transfer agent or terminating agent as is known in the art.

In one embodiment, the second polymer is obtained by polymerizing a second monomer in the presence of a thiocarbonylthio RAFT chain transfer agent to form a polymer comprising a terminal thiocarbonylthio group; and cleaving the terminal thiocarbonylthio group to a thiol group to form the second polymer comprising a terminal thiol group.

In one embodiment, the terminal functional group of the second polymer is incorporated in the second polymer during polymerization through the mechanism of reversible addition-fragmentation chain transfer (RAFT). More details of the RAFT polymerization mechanism may be found by reference to Moad et al., Aust. J. Chem. 2005, 58, 379-410. As is known in the art, RAFT polymerization of free-radical polymerizable monomers is accomplished in the presence of a thiocarbonylthio RAFT chain transfer agent of general formula (III) 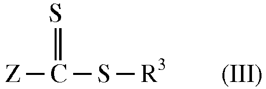 where R³ is a free radical leaving group able to reinitiate polymerization, and Z is a functional group that influences the rate of radical addition and fragmentation. Suitable thiocarbonylthio RAFT chain transfer agents include dithioesters, trithiocarbonates, dithiocarbamates, and xanthates. In one embodiment, the thiocarbonylthio chain transfer agent is a trithiocarbonate. In one embodiment, the thiocarbonylthio chain transfer agent is selected from the group consisting of S-1-dodecyl-S-(αα'-dimethyl-α"-acetic acid) trithiocarbonate and 4-cyano-4-dodecylsulfanylthiocarbonylsulfanyl-4-methyl butyric acid.

Upon RAFT polymerization in the presence of a suitable thiocarbonylthio chain transfer agent, the chain-terminated polymer has the general formula (IV) 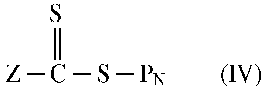 where P_{N} represents the polymer chain exhibiting a LCST.

The chain terminated polymer of formula III is then reacted with a suitable nucleophile to cleave the C-S linkage to obtain a second polymer of formula (V) having a terminal thiol group

H-S-P_{N} (V)

In one embodiment, the chain terminated polymer of formula IV is treated by aminolysis to obtain the thiol-terminated polymer of formula V.

A third step of the method is reacting the second polymer with the first polymer to form a graft copolymer, the graft copolymer comprising a backbone derived from the first polymer and sidechains derived from the second polymer. During reacting of the second polymer with the first polymer, a second polymer is linked to the first polymer through reaction of a terminal functional group of the second polymer with the unsaturated carbon-carbon bond of the first polymer.

In one embodiment, the thiol-terminated second polymer is reacted with the first polymer in the presence of a free-radical initiator via a thiol-ene reaction as is known in the art, see for example Macromolecules 2008, 41, 9946-9947. In one embodiment, the free-radical initiator is selected from the group consisting of 2,4,6-Trimethylbenzoyldiphenylphosphine oxide and azobisisobutyonitrile (AIBN).

The reaction of the first polymer with the thiol-terminated second polymer may be carried out in solution, for example in a hydrocarbon solvent or the like. Alternatively, the reaction may be carried out in a dry mix, by combination of the first and second polymers in suitable rubber mixing equipment.

In one embodiment, the graft copolymer has the structure VI 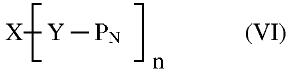 where X is the first polymer and is a polymer derived from a monomer comprising at least one conjugated diene monomer and optionally at least one vinyl aromatic monomer (i.e, a polymer containing at least one carbon-carbon double bond); P_{N} is a polymer capable of exhibiting a lower critical solution temperature (LCST);
⁅Y- P_{N}] is derived from the second polymer where Y is a divalent group bonded to both X and P_{N}; and n is the number of ⁅Y- P_{N}] groups bonded to X.

Suitable conjugated diene monomers include butadiene and isoprene. Suitable vinyl aromatic monomers include styrene.

In one embodiment, the polymer P_{N} capable of exhibiting a lower critical solution temperature has a weight average molecular weight ranging from 500 to 20000 g/mol.

In one embodiment, the polymer P_{N} capable of exhibiting a lower critical solution temperature has a lower critical solution temperature in a range of from 0°C to 100°C.

In one embodiment, the copolymer comprises from 1 to 20 weight percent P_{N}.

Y is a divalent group bonded to both X and P_{N}. In one embodiment, Y is sulfur or oxygen. In one embodiment, Y is sulfur.

Generally, Y originates as a terminal functional group of the polymer P_{N} capable of reacting with a carbon-carbon double bond of the first polymer X. Thus, as it exists in the copolymer Y links X to P_{N}. In one embodiment, the terminal functional group is a thiol group. Such a terminal functional group may be incorporated into the polymer P_{N} during polymerization, for example, through use of a suitable chain transfer agent or terminating agent as is known in the art.

The number n of ⁅Y- P_{N}] groups bonded to X ranges from 2 to 30 in a given copolymer molecule.

The rubber composition may optionally include, in addition to the copolymer comprising a polymer having a lower critical solution temperature (LCST), one or more rubbers or elastomers containing olefinic unsaturation. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the at least one additional rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of about 40 to about 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210 or 243; silicas available from Rhodia, with, for example, designations of Z1165MP or Z165GR and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, but not limited to, particulate fillers including ultra high molecular weight polyethylene (UHMWPE), crosslinked particulate polymer gels including but not limited to those disclosed in US-B-6,242,534; US-B- 6,207,757; US-B- 6,133,364; US-B- 6,372,857; US-B- 5,395,891; or US-B- 6,127,488, and plasticized starch composite filler including but not limited to that disclosed in US-A-5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Q - Alk - S_{q} - Alk - Q (VII)

in which Q is selected from the group consisting of 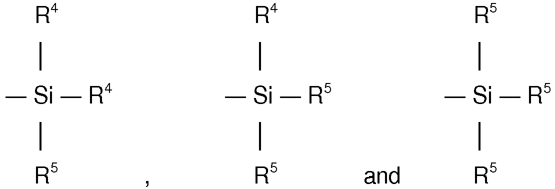 where R⁴ is an alkyl group of 1 to 4 carbon atoms, cyclohexyl or phenyl; R⁵ is alkoxy of 1 to 8 carbon atoms, or cycloalkoxy of 5 to 8 carbon atoms; Alk is a divalent hydrocarbon of 1 to 18 carbon atoms and q is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula VII, Q may be 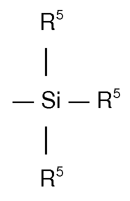 where R⁵ is an alkoxy of 2 to 4 carbon atoms, alternatively 2 carbon atoms; alk is a divalent hydrocarbon of 2 to 4 carbon atoms, alternatively with 3 carbon atoms; and q is an integer of from 2 to 5, alternatively 2 or 4.

In another embodiment, suitable sulfur containing organosilicon compounds include compounds disclosed in US-B- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following examples.

### Example 1

In this example, functionalization of a styrene-butadiene rubber with 2-mercaptonaphthaline is illustrated to demonstrate the thiol-ene reaction.

To test the reactivity and reaction conditions of the styrene-butadiene rubber in a thiol-ene reaction, some reactions with a model thiol were made. The chosen thiol was 2-mercaptonaphthaline, from Aldrich.

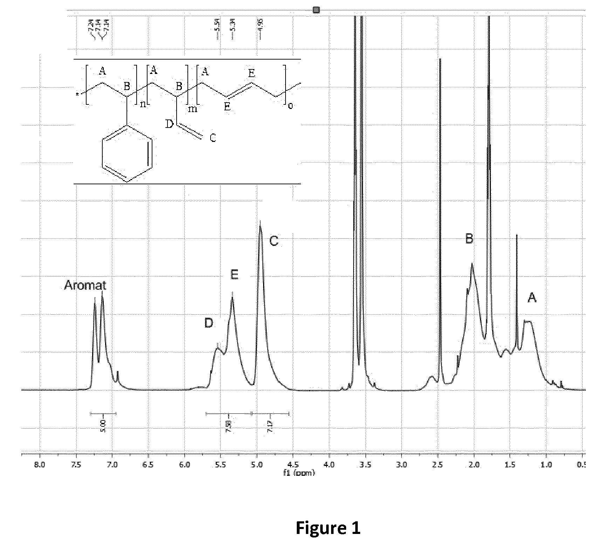

The properties of the used styrene-butadiene rubber are summarized in Table 1. Figure 1 shows the ¹H-NMR spectrum of the elastomer.

**Table 1**

| | |
|---|---|
| Mooney (avg) | 27.6 |
| Finished Mooney | 23.1 |
| Tg (onset)/ °C | -21.74 |
| Tg (midpoint) / °C | -17.52 |
| FTIR Styrene/% | 25.392 |
| FTIR Vinyl/% | 47.506 |
| FTIR Cis/% | 13.144 |
| FTIR Trans/% | 13.058 |
| Mn / g/mol | 124122 |
| Mw / g/mol | 207982 |
| Mz / g/mol | 327454 |
| PDI | 1.67 |

### Synthesis of 2-mercaptonaphthaline functionalized rubber

This compound was synthesized twice, once with AIBN as initiator for the reaction and once with an acylphosphine oxide photoinitiator (Lucirin TPO).

For the reaction initiated by AIBN, 1 g of SBR was dissolved in 50 ml dry THF and 1.40 g of 2-mercaptonaphthaline and 0.14 g AIBN were added. The solution was degassed under a stream of argon for 2 hours and was then placed in a preheated oil bath at 75°C. The reaction was stirred for 14.5 hours at that temperature.

For the reaction initiated by the photoinitiator, a mixture of 1 g SBR, 1.40 g 2-mercaptonaphthaline and 0.30 g Lucirin TPO was degassed under a stream of argon for 2 hours and then was placed under a UV-lamp (320-380 nm) for 14.5 hours.

To make sure that no free thiol was present in the product, both reaction mixtures were dialyzed against THF for two days. Afterwards the solvent was evaporated and the product was dried under vacuum.

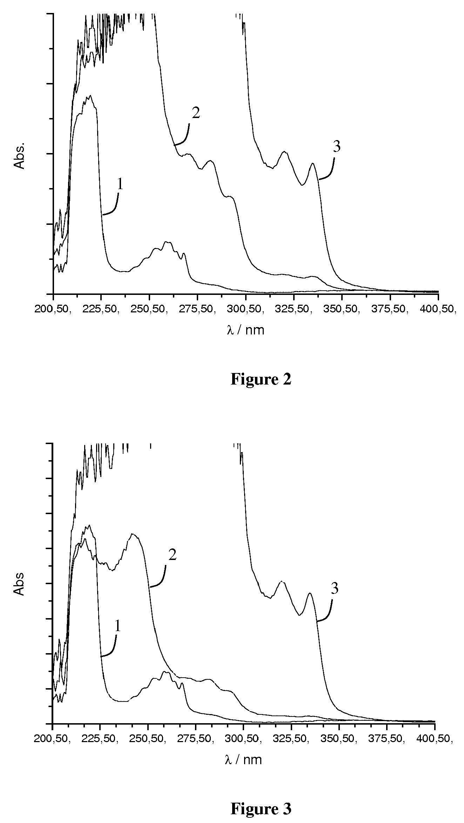

Figure 2 shows the UV-vis spectrum of the elastomer before (1) and after the reaction with 2-mercaptonaphtaline (2) and the spectrum of the pure thiol (3). Here the photoinitiator was used. Figure 3 shows the same for the reaction which was initiated by AIBN, with the UV-vis spectrum of the elastomer before (1) and after the reaction with 2-mercaptonaphthanline (2) and the spectrum of the pure thiol (3).

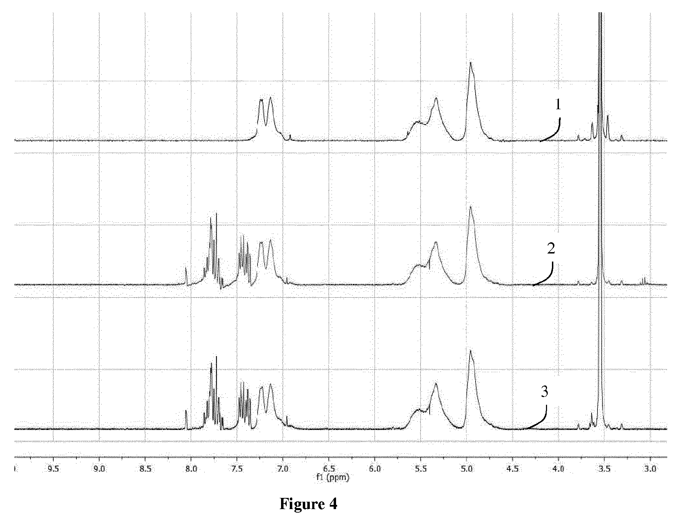

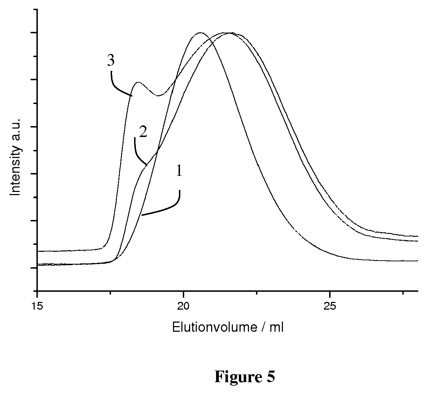

Figure 4 shows the ¹H-NMR spectrum of the elastomer before (1) and after reaction with the thiol in the presence of AIBN (2) and Lucirin (3). Compared to the ¹H-NMR spectrum of the unfunctionalized rubber, there is an increase of the signals for the aromatic protons and a decrease for the vinyl groups after the polymer analogous reaction, confirming that the SBR was successfully functionalized with 2-Mercaptonaphthaline. GPC-measurement (in THF) as shown in Figure 5 for the SBR (1), the SBR functionalized in the presence of AIBN (2) and in the presence of Lucirin (3) confirmed that the product is not greatly cross linked. As seen in Figure 5, especially the curve of the AIBN-initiated product (2) shows very little cross linking (small shoulder), so that the decrease of the signal of vinyl protons can be assigned to functionalization.

### Example 2

In this example, preparation of poly-(N-isopropylacrylamide), or PNIPAM, is illustrated.

RAFT-polymerization was used for the preparation of PNIPAM. For this purpose two alternative chain transfer agents (CTA) were prepared: S-1-Dodecyl-S-(αα'-dimethyl-α"-aceticacid)trithiocarbonate (DMP) and 4-Cyano-4-dodecylsulfanylthiocarbonylsulfanyl-4-methyl butyric acid (CDSMB). 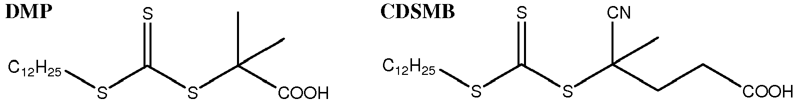 The RAFT reaction scheme is as follows:

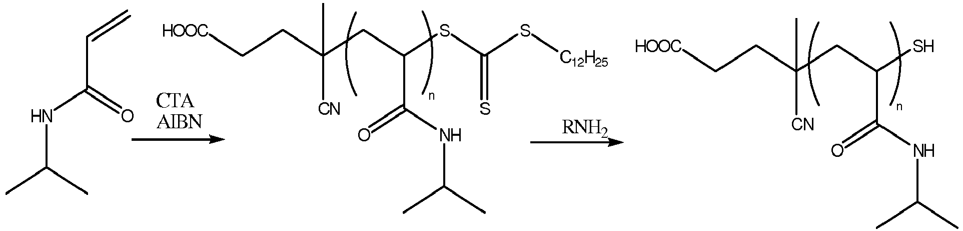

### Synthesis of chain transfer agents

### S-1-Dodecyl-S-(αα'-dimethyl-α"-acetic acid)trithiocarbonate (DMP)

S-1-Dodecyl-S-(αα'-dimethyl-α"-acetic acid)trithiocarbonate was synthesized using literature procedure.[ J. T. Lai, D. Filla, R. Shea, Macromolecules 2002, 35, 6754.] Yield: 41 %
¹H-NMR (CDCl₃/300 MHz): δ [ppm]: 0,85 (t, 3H), 1,16-1,47 (m, 20H), 1,71 (s, 6H), 3,26 (t, 2H), 13,05 (s, 1 H)
4-Cyano-4-dodecylsulfanylthiocarbonylsulfanyl-4-methyl butyric acid (CDSMB)

4-Cyano-4-dodecylsulfanylthiocarbonylsulfanyl-4-methyl butyric acid was synthesized in two steps. The first step was prepared using literature procedure [W. G. Weber, J. B. McLeary, R. D. Sanderson, Tetrahedron Lett. 2006, 47, 4771.].
Step 1: Bis-(dodecylsulfanylthiocarbonyl)disulfide
   Yield: 72 %
   ¹H-NMR (CDCl₃ / 300 MHz): δ [ppm]: 0.86 (t, 6H); 1.11-1.43 (m, 36H); 1.65 (q, 4H); 2.66 (t, 4H)
Step 2: 4-Cyano-4-dodecylsulfanylthiocarbonylsulfanyl-4-methyl butyric acid
   10 g of Bis-(dodecylsulfanylthiocarbonyl)disulfide and 7.7 g of 4,4'-azobis(4-cyano)pentaneacid were dissolved in 60 ml of freshly distilled dioxane. The mixture was degassed under a stream of argon for one hour and heated at 80 °C under argon atmosphere for 21 hours. The solvent was evaporated and the resulting dark orange oil was recrystallized from hexanes twice.
   Yield: 52 %
   ¹H-NMR (CDCl₃/300 MHz): δ [ppm]: 0.87 (t, 3H); 1.12-1.45 (m, 18H); 1.68 (q, 2H); 1.87 (s, 3H); 2.30-2.63 (m, 2H), 2.68 (t, 2H); 3.32 (t, 2H)

### Synthesis of PNIPAM-CTA

All NIPAM-polymers were prepared in a Schlenk tube containing N-isopropyacrylamide, CTA, AIBN and dry dioxane as a solvent. The exact amount of all components can be obtained from Table 2. After three freeze-pump thaw cycles the mixture was placed in a preheated oil bath at 80 °C for 20 hours. The mixture was precipitated in hexane (poor solvent) / THF (good solvent) three times and dried under vacuum. Table 2 further shows the amount of used NIPAM (N-isopropylacrylamide) monomer, CTA (DMP or CDSMB), AIBN and dioxane. The yield refers to the amount of monomer used. Molecular weights were measured by GPC in DMF using PMMA as calibration.

**Table 2**

| Sample | NIPAM /mmol | DMP /mmol | CDSMB /mmol | AIBN /mmol | Dioxane /ml | Yield /% | M (calc.) /(g/mol) | M(GPC) /(g/mol) | PDI |
|---|---|---|---|---|---|---|---|---|---|
| PNI 1 | 8.8 | 0.44 | 0 | 0.04 | 6 | 94 | 2263 | 1461 | 1.13 |
| PNI 2 | 8.8 | 0.29 | 0 | 0.03 | 6 | 98 | 3395 | 3008 | 1.16 |
| PNI 3 | 8.8 | 0.18 | 0 | 0.02 | 6 | 94 | 5658 | 3251 | 1.14 |
| PNI 4 | 8.8 | 0 | 0.18 | 0.02 | 6 | 96 | 5658 | 4727 | 1.17 |
| PNI 5 | 8.8 | 0 | 0.10 | 0.01 | 6 | 89 | 10184 | 6096 | 1.18 |
| PNI 6 | 8.8 | 0 | 0.18 | 0.02 | 6 | 98 | 5658 | 4723 | 1.16 |
| PNI 7 | 8.8 | 0 | 0.09 | 0.01 | 6 | 96 | 11316 | 5905 | 1.13 |
| PNI 8 | 17.7 | 0 | 0.29 | 0.03 | 8 | 96 | 6790 | 5749 | 1.19 |
| PNI 9 | 17.7 | 0 | 0.25 | 0.03 | 8 | 92 | 7921 | 5202 | 1.17 |
| PNI 10 | 17.7 | 0 | 0.20 | 0.02 | 8 | 93 | 10184 | 6785 | 1.37 |
| PNI 11 | 17.7 | 0 | 0.59 | 0.06 | 8 | 99 | 3395 | 3055 | 1.14 |

The CDSMB proved more effective as shown in Table 3. Three polymers were synthesized to have the same calculated molecular weight, one with DMP and two with 4-Cyano-4-dodecylsulfanylthiocarbonylsulfanyl-4-methyl butyric acid. The discrepancy from the calculated molecular weight of the polymer and the weight measured by GPC in DMF is smaller for the CDSMB. Also the reproducibility was very good for the reaction with 4-Cyano-4-dodecylsulfanylthiocarbonylsulfanyl-4-methyl butyric acid. Consequently CDSMB was used further on for the polymerization of NIPAM.

**Table 3**

| Sample | M (calc.) / (g/mol) | M(GPC) / (g/mol) | PDI | M (calc)-M(GPC) /(g/mol) | CTA |
|---|---|---|---|---|---|
| PNI 3 | 5658 | 3251 | 1.13 | 2407 | DMP |
| PNI 4 | 5658 | 4727 | 1.17 | 931 | CDSMB |
| PNI 6 | 5658 | 4723 | 1.16 | 935 | CDSMB |

The cleavage of the trithiocarbonate end group was done by aminolysis. The aminolysis was performed by stirring a mixture of PNIPAM-CTA, tributyphosphine and amine in THF for several hours at room temperature. The transformation to the thiol-group was tested with two amines: ethanolamine and hexylamine.

Kinetic measurements by UV-vis spectroscopy confirmed the completeness of the reaction after one hour. The spectrum was measured every 15 minutes after adding the amine to the solution of the polymer.

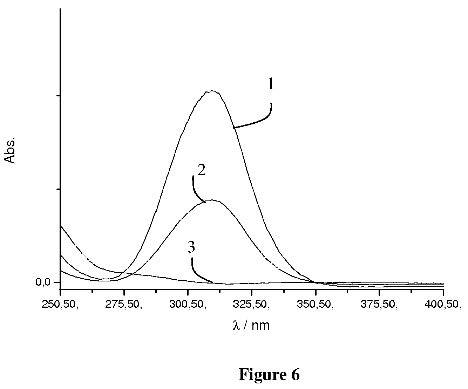

The cleavage of the trithiocarbonate-group was confirmed by UV-vis spectroscopy for both amines by absence of the absorption band at 310 nm (C=S). For further studies hexylamine was chosen for the cleavage because of its good solubility in hexane, which was used to precipitate the polymer after the reaction. Figure 6 compares the spectra of the pure CTA (1), and PNIPAM with trithiocarbonate-end group (2) and SH-end group (3), at which the decrease and loss the absorption band of the trithiocarbonate group is shown.

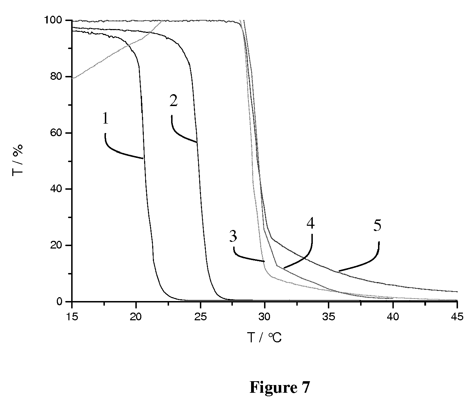

LCST of the RAFT-synthesized PNIPAM was determined by measurement of temperature dependant turbidity of poly-(N-isopropylacrylamide) in water at 632 nm using UV-vis spectroscopy. The solutions had a concentration of 5 mg/ml. The LCST was defined as the temperature at 50 % transmission. As is known the LCST depends on the end group and the molecular weight of the polymer. Very short polymers have a lower LCST because of the influence of hydrophobic end groups on the LCST. The influence of the hydrophobic groups on the LCST diminishes for longer polymer chains. This can be seen for some of the polymers with a hydrophobic CTA endgroup of Table 2 as seen in Figure 7, where sample PNI1 (1) having a relatively low molecular weight exhibits a LCST of 20.6°C, which is about 11 °C lower than the LCST of the higher molecular weight samples PNI6 (3), PNI10 (4), and PNI4 (5) which was detected at about 31 °C. Sample PNI2 (2) showed an intermediate value for LCST.

### Example 3

In this example, functionalization of a styrene-butadiene rubber with PNIPAM is illustrated.

### Synthesis of functionalized rubber elastomers

Functionalized elastomer was produced using the following general procedure: A solution of SBR, AIBN and the thiol in dry THF was degassed under argon atmosphere at room temperature for 2 hours. The exact amount of educts for each reaction is shown in Table 4. The reaction mixture was then placed in a preheated oil bath at 70° for at least 20 hours. To make sure that no free thiol was in the reaction product, the product was dialyzed against THF for three days. After the dialysis the solvent was evaporated and the product was dried under vacuum. The results of the elemental analysis of three functionalized elastomers are shown in Table 5, with the calculated weight percent of PNIPAM in the resulting functionalized SBR.

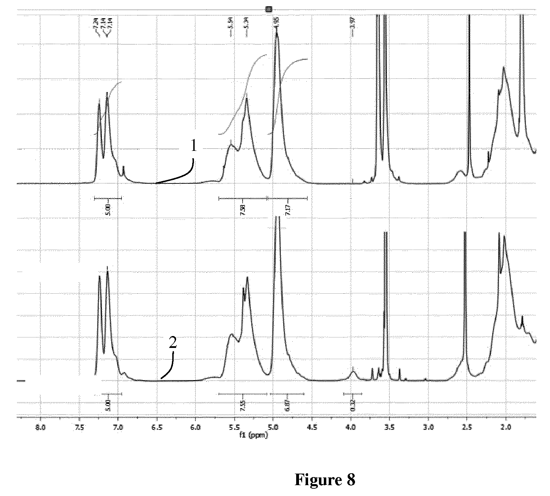

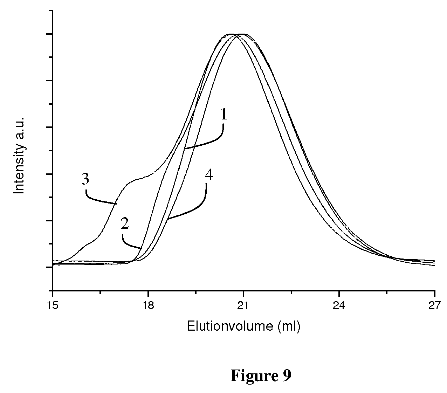

The ¹H-NMR spectrum of the SBR (1) and of the functionalized rubber (2) are shown in Figure 8. As seen in Figure 8, the typical elastomer signals are observable, but also the peak of the CH-group of the isopropyl-group of PNIPAM at 3.97 ppm. Again a decrease of the vinyl signals can be observed, indicating a successful functionalization. GPC measurements indicated little cross linking if any of all samples as seen in Figure 9. Figure 9 shows exemplary GPC curves for the SBR (1) and for three functionalized elastomers SBR2 (2), SBR5 (3) and SBR6 (4). As indicated by the presence of the shoulder at about 16-17 ml elution volume in Figure 9, SBR6 showed no cross linking during the reaction, SBR2 showed very little cross linking and SBR 5 shows some cross linking. All three samples were soluble, indicating they were not greatly cross linked.

**Table 4**

| Sample | weight PNIPAM/ (SBR) | PNIPAM used¹ | mass SBR /g | mass AIBN /g | mass thiol /g | M (PNIPAM-SH) / (g/mol) |
|---|---|---|---|---|---|---|
| SBR 1 | 20 | PNI6 | 1.0 | 0.027 | 0.20 | 4723 |
| SBR 2 | 20 | PNI7 | 1.0 | 0.027 | 0.20 | 5950 |
| SBR 3 | 10 | PNI8 | 1.0 | 0.022 | 0.10 | 5749 |
| SBR 4 | 15 | PNI8 | 1.0 | 0.023 | 0.15 | 5749 |
| SBR 5 | 5 | PNI8 | 1.0 | 0.020 | 0.05 | 5749 |
| SBR 6 | 25 | PNI3 | 1.0 | 0.003 | 0.25 | 3395 |
| SBR 7 | 200 | PNI2 | 0.5 | 0.001 | 1.17 | 3008 |

| | | | | | | |
|---|---|---|---|---|---|---|
| ¹ from Example 2 | | | | | | |

**Table 5**

| Sample | SBR | SBR 3 | SBR 4 | SBR 5 |
|---|---|---|---|---|
| Measurement 1 | 3.753 mg | 6.968 mg | 3.472 mg | 1.344 mg |
| C/% | 89.72 | 86.95 | 85.05 | 88.21 |
| H/% | 10.50 | 10.20 | 10.14 | 8.87 |
| N/% | 0 | 1.03 | 1.29 | 0.42 |
| S/% | 0 | 0.08 | 0.29 | 0.32 |
| PNIPAM in SBR/ wt% | | 8.32 | 10.42 | 3.39 |
| Measurement 2 | 4.882 mg | 2.812 mg | 5.129 mg | 1.164 mg |
| C/% | 89.75 | 86.81 | 85.03 | 87.92 |
| H/% | 10.48 | 10.50 | 10.17 | 9.07 |
| N/% | 0 | 1.01 | 1.30 | 0.35 |
| S/% | 0 | 0.12 | 0.12 | 0.30 |
| PNIPAM in SBR/ wt% | | 8.16 | 10.50 | 2.83 |

### Example 4

In this example, the effect of PNIPAM-functionalization on the wettability of a styrene-butadiene rubber is illustrated. Wettability of the functionalized SBR was determined by measuring the contact angle of water droplets on a glass plate coated with the functionalized polymer.

Contact angle was measured following the procedure. The functionalized SBR samples were dissolved in THF and spin-coated on a glass slide. After drying in vacuum the slides were placed under a needle and a water droplet was purged out of the needle onto the coated glass. The contact angle was determined by measurement of the inner angle between the droplet and the glass surface. Contact angle was measured for each of the series of functionalized SBR at two temperatures, 22 °C and 45 °C. These temperatures were chosen as being well below and above the 32 °C LCST for PNIPAM. The samples used corresponded to SBR3, SBR4, SBR5 and SBR2.

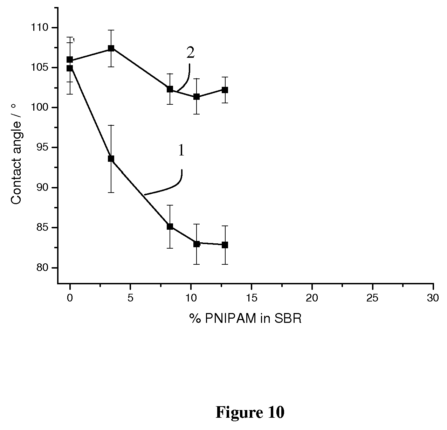

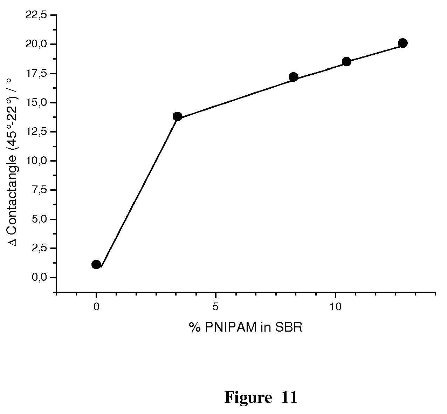

Figure 10 shows the measured contact angle as a function of PNIPAM content at each of the two temperatures 22 °C (1) and 45 °C (2). As seen in Figure 10, the contact angle for the samples measured below the LCST at 22 °C showed a significant decrease in contact angle as the amount of PNIPAM in the polymer was increased, indicating that the functionalized polymer becomes relatively hydrophilic below the LCST. The contact angle for samples measured above the LCST at 45 °C by comparison was relatively constant, indicating that the functionalized polymer is relatively hydrophobic above the LCST. The relative difference in contact angle above and below the LCST is shown in Figure 11, illustrating the strong increase of hydrophilic behavior with increasing PNIPAM content of the functionalized SBR.

### Example 5

In this example, rheological properties of PNIPAM-functionalized SBR is illustrated.

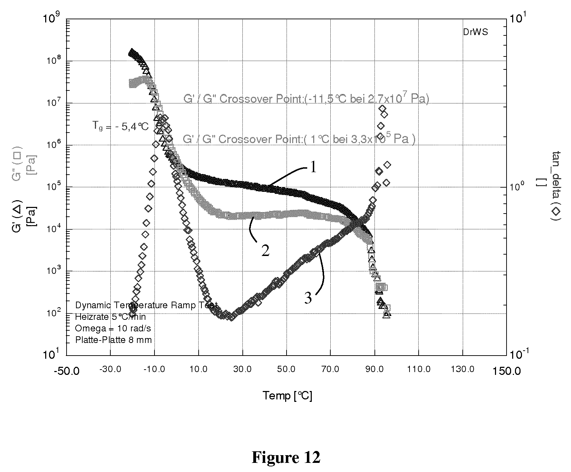

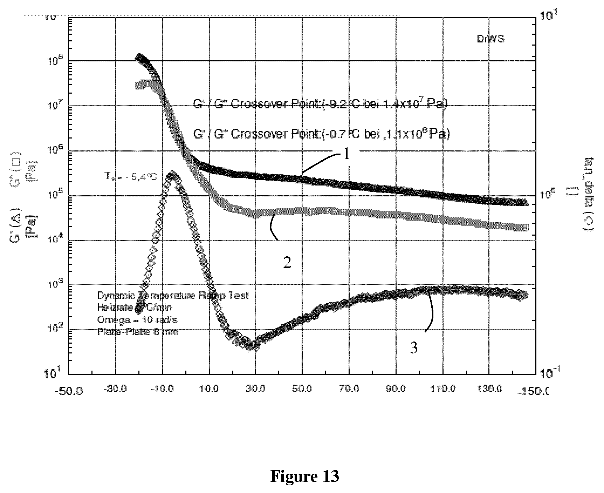

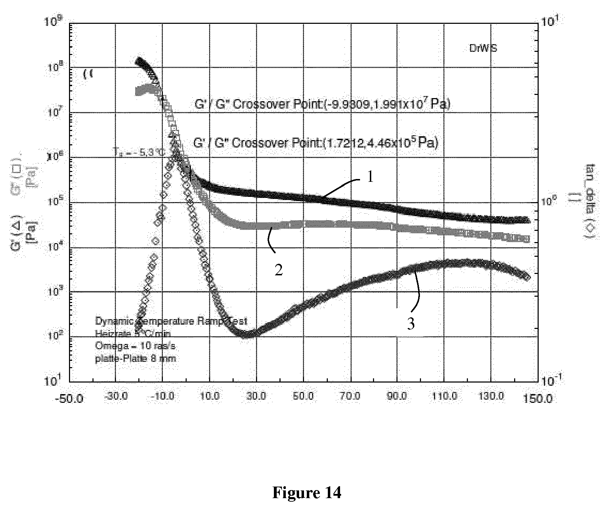

Rheological measurements were performed using a parallel plate rheometer (8 mm plates) and a heating rate of 5°C per minute to investigate the influence of grafted PNIPAM side chains on the mechanical behavior of the SBR. Figure 12 shows the typical rheological behavior of unmodified SBR, with a drop of G' (1) and G" (2) and increase in tan delta (3) at temperatures above about 70°C. Such behavior indicates flow of the unmodified polymer at the higher temperatures. Figures 13 and 14 show the rheological behavior of PNIPAM-grafted SBR for polymers with 6 percent by weight of PNIPAM (Figure 13) and 4 percent by weight PNIPAM (Figure 14). A seen in Figures 13 and 14, grafting of PNIPAM side chains to the SBR leads to a stabilization of the high temperature (above about 70 °C) rubbery plateaus at for G' (1), G" (2) and tan delta (3). Without wishing to be bound by any theory, it is believed that this may be due to a microphase separation of the PNIPAM side chains from the SBR matrix. The high Tg PNIPAM phases may act as physical crosslinks which prevent the flow of the SBR at higher temperatures. With further reference to Figures 13 and 14, when the SBR functionalized with 6 weight percent and 4 weight percent PNIPAM respectively are compared, it can be seen that the tan delta increase with temperature at the higher temperatures (above about 70 °C) is lower when the PNIPAM content is higher. Again while not wishing to be bound by any theory, this behavior may be due to a more efficient physical crosslinking of the SBR when the PNIPAM content is increased.

### Example 6

The behavior illustrated in Figures 10 through 14 suggest that through the use of the copolymer showing LCST behavior, the usual compromise between tire performance, rolling resistance (an indicator of fuel economy) and treadwear may be avoided, by decoupling the various compound indicators.

A tread compound including the copolymer showing LCST behavior may be expected to show the following in a tire. Using a tread comprising the copolymer, a tire tread in contact with a wet surface at a temperature below the LCST of the copolymer may be expected to show enhanced wet grip compared to an otherwise identical tire not including the copolymer. However, the abrasion and rolling resistance would be not be severely compromised. While not wishing to be bound by any theory, the enhanced wet grip is though to be due to softening of the tread surface due to the effect of the water on the LCST side chains of the copolymer. Since this softening is reversible and the tread will thus stiffen under dry conditions, treadwear should not be compromised as the treadwear is largely independent of the transition between LCST states of the copolymer at the tread surface. The stiffening is due both to the precipitation of the LCST side chains as well as the reinforcing effect discussed in Example 5. Further, since the softening effect due to the copolymer LCST side chains is likely a surface phenomenon without extension into the bulk of the tread compound, the rolling resistance of the tread is thought to be independent of the transition between LCST states of the copolymer at the tread surface.

## Claims

1. A method of making a graft copolymer, the method comprising the steps of
obtaining a first polymer comprising at least one carbon-carbon double bond, wherein the first polymer is derived from at least one first monomer, the at least one first monomer comprising a conjugated diene monomer;
obtaining a second polymer capable of exhibiting a lower critical solution temperature (LCST) as determined by the method described in the experimental part and comprising a terminal functional group capable of reacting with the carbon-carbon double bond;
reacting the second polymer with the first polymer to form a graft copolymer, the graft copolymer comprising a backbone derived from the first polymer and sidechains derived from the second polymer; wherein
the step of obtaining the second polymer comprises the steps of:
polymerizing a second monomer in the presence of a thiocarbonylthio RAFT chain transfer agent to form a polymer comprising a terminal thiocarbonylthio group; and
cleaving the terminal thiocarbonylthio group to a thiol group to form the second polymer comprising a terminal thiol group; and wherein
(i) the second monomer is an N-substituted acrylamide derivative; or
(ii) the second monomer is of the formula: 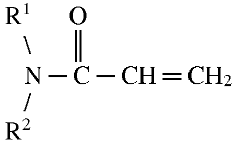 where R¹ and R² are independently selected from the group consisting of hydrogen, a C2 to a C6 linear alkyl, a C2 to a C6 branched alkyl, and a C3 to a C6 cycloalkyl, with the proviso that at least one of R¹ and R² is not hydrogen; or
(iii) the second monomer is selected from the group consisting of N-isopropylacrylamide, N-cyclopropylacrylamide, and N, N-diethylacrylamide.

2. The method of claim 1, wherein in the first polymer is selected from the group consisting of polyisoprene rubber, polybutadiene rubber, and styrene-butadiene rubber.

3. A copolymer comprising the structure: 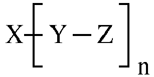 where X is a polymer derived from a monomer comprising at least one conjugated diene monomer and optionally at least one vinyl aromatic monomer such as styrene; Z is a polymer capable of exhibiting a lower critical solution temperature (LCST); as determined by the method described in the experimental part; Y is a divalent group bonded to both X and Z; and n is the number of ⁅Y-Z] groups bonded to X; wherein
i) Z is derived from a monomer of formula: 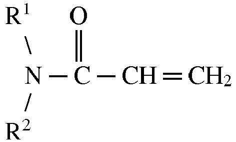 where R¹ and R² are independently selected from the group consisting of hydrogen, a C2 to a C6 linear alkyl, a C2 to a C6 branched alkyl, and a C3 to a C6 cycloalkyl, with the proviso that at least one of R¹ and R² is not hydrogen; or
ii) Z is selected from the group consisting of poly(N-isopropylacrylamide), poly(N-cyclopropylacrylamide), and poly (N, N-diethylacrylamide); or
iii) Z is of the formula 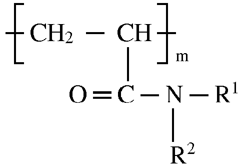 where R¹ and R² are independently selected from the group consisting of hydrogen, a C2 to a C6 linear alkyl, a C2 to a C6 branched alkyl, and a C3 to a C6 cycloalkyl, with the proviso that at least one of R¹ and R² is not hydrogen, and m is the degree of polymerization of the hydrocarbon chain.

4. The copolymer of claim 3, wherein the at least one conjugated diene monomer is selected from the group consisting of isoprene and butadiene.

5. The copolymer of claim 3 or 4, wherein X is selected from the group consisting of solution polymerized styrene-butadiene rubber, emulsion polymerized styrene-butadiene rubber, polybutadiene, natural polyisoprene rubber, and synthetic polyisoprene rubber.

6. The copolymer of claim 3, 4 or 5, wherein Y is a divalent group selected from the group consisting of sulfur and oxygen; and/or wherein the polymer Z capable of exhibiting a lower critical solution temperature (LCST) has a weight average molecular weight ranging from 500 to 20000 g/gmol, determined by GPC in DMF calibrated to PMMA.

7. The copolymer of at least one of the claims 3 to 6, comprising from 1 to 20 weight percent Z and/or wherein n ranges from 2 to 30.

8. The copolymer of at least one of the claims 3 to 7, wherein
(i) the vinyl aromatic monomer is styrene, the conjugated diene monomer is butadiene, Y is divalent sulfur, and Z is derived from N-isopropylacrylamide; or
(ii) the conjugated diene monomer is isoprene, Y is divalent sulfur, and Z is derived from N-isopropylacrylamide; or
(iii) the conjugated diene monomer is butadiene, Y is divalent sulfur, and Z is derived from N-isopropylacrylamide.

9. A pneumatic tire having a tread, the tread comprising a rubber composition comprising a copolymer in accordance with at least one of the previous claims 3 to 8.

## Patentansprüche

1. Verfahren zur Herstellung eines Pfropfcopolymers, wobei das Verfahren die Schritte umfasst des
Erhaltens eines ersten Polymers, umfassend mindestens eine KohlenstoffKohlenstoff-Doppelbindung, wobei das erste Polymer von mindestens einem ersten Monomer abgeleitet ist, wobei das mindestens eine erste Monomer ein konjugiertes Dienmonomer umfasst;
Erhaltens eines zweiten Polymers, das fähig ist, eine niedrigere kritische Lösungstemperatur (LCST), ermittelt mittels des in dem experimentellen Teil beschriebenen Verfahrens, aufzuweisen und eine endständige funktionelle Gruppe umfasst, die fähig ist, mit der Kohlenstoff-Kohlenstoff-Doppelbindung zu reagieren;
Reagierens des zweiten Polymers mit dem ersten Polymer, um ein Propfcopolymer zu bilden, wobei das Pfropfcopolymer eine von dem ersten Polymer abgeleitete Hauptkette und von dem zweiten Polymer abgeleitete Seitenketten umfasst; wobei
der Schritt des Erhaltens des zweiten Polymers die Schritte umfasst des:
Polymerisierens eines zweiten Monomers in Gegenwart eines Thiocarbonylthio-RAFT-Kettenübertragungsmittels zur Bildung eines Polymers, das eine endständige Thiocarbonylthiogruppe umfasst; und
Spaltens der endständigen Thiocarbonylthiogruppe zu einer Thiolgruppe zur Bildung des zweiten Polymers, das eine endständige Thiolgruppe umfasst; und wobei
(i) das zweite Monomer ein N-substituiertes Acrylamidderivat ist; und
(ii) das zweite Monomer die Formel hat: 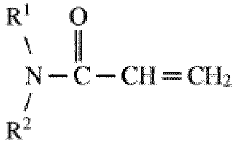 wobei R¹ und R² unabhängig aus der Gruppe ausgewählt sind, bestehend aus Wasserstoff, einem linearen C2- bis C6-Alkyl, einem verzweigten C2- bis C6-Alkyl und einem C3-bis C6-Cycloalkyl, mit der Maßgabe, dass mindestens eines von R¹ und R² nicht Wasserstoff ist; oder
(iii) das zweite Monomer aus der Gruppe ausgewählt ist, bestehend aus N-Isopropylacrylamid, N-Cyclopropylacrylamid und N, N-Diethylacrylamid.

2. Verfahren nach Anspruch 1, wobei das erste Polymer aus der Gruppe ausgewählt ist, bestehend aus Polyisoprenkautschuk, Polybutadienkautschuk und Styrol-Butadien-Kautschuk.

3. Copolymer, umfassend die Struktur: 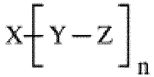 wobei X ein Polymer ist, abgeleitet von einem Monomer, umfassend mindestens ein konjugiertes Dienmonomer, und optional mindestens einem vinylaromatischen Monomer, wie etwa Styrol; Z ein Polymer ist, das fähig ist, eine niedrigere kritische Lösungstemperatur (LCST), ermittelt mittels des in dem experimentellen Teil beschriebenen Verfahrens, aufzuweisen; Y eine an sowohl X als auch Z gebundene zweiwertige Gruppe ist; und n die Anzahl der an X gebundenen -[-Y-Z] - Gruppen ist; wobei
(i) Z abgeleitet ist von einem Monomer der Formel: 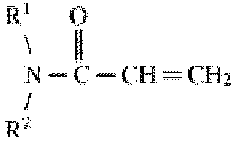 wobei R¹ und R² unabhängig aus der Gruppe ausgewählt sind, bestehend aus Wasserstoff, einem linearen C2- bis C6-Alkyl, einem verzweigten C2- bis C6-Alkyl und einem C3-bis C6-Cycloalkyl, mit der Maßgabe, dass mindestens eines von R¹ und R² nicht Wasserstoff ist; oder
(ii) Z aus der Gruppe ausgewählt ist, bestehend aus poly(N-Isopropylacrylamid), poly(N-Cyclopropylacrylamid) und poly(N,N-Diethylacrylamid); oder
(iii) Z die Formel aufweist: 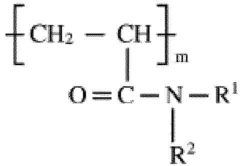 wobei R¹ und R² unabhängig aus der Gruppe ausgewählt sind, bestehend aus Wasserstoff, einem linearen C2- bis C6-Alkyl, einem verzweigten C2- bis C6-Alkyl und einem C3-bis C6-Cycloalkyl, mit der Maßgabe, dass mindestens eines von R¹ und R² nicht Wasserstoff ist, und m der Polymerisationsgrad der Kohlenwasserstoffkette ist.

4. Copolymer nach Anspruch 3, wobei das mindestens eine konjugierte Dienmonomer aus der aus Isopren und Butadien bestehenden Gruppe ausgewählt ist.

5. Copolymer nach Anspruch 3 oder 4, wobei X aus der Gruppe ausgewählt ist, bestehend aus lösungspolymerisiertem Styrol-Butadien-Kautschuk, emulsionspolymerisiertem Styrol-Butadien-Kautschuk, Polybutadien, natürlichem Polyisoprenkautschuk und synthetischem Polyisoprenkautschuk.

6. Copolymer nach Anspruch 3, 4 oder 5, wobei Y eine zweiwertige Gruppe ist, ausgewählt aus der aus Schwefel und Sauerstoff bestehenden Gruppe; und/oder wobei das Polymer Z, das fähig ist, eine niedrigere kritische Lösungstemperatur (LCST) aufzuweisen, eine gewichtsmittlere Molmasse im Bereich von 500 bis 20000 g/gmol hat, ermittelt durch GPC in DMF kalibriert auf PMMA.

7. Copolymer nach mindestens einem der Ansprüche 3 bis 6, umfassend 1 bis 20 Gewichtsprozent Z, und/oder wobei n sich auf 2 bis 30 beläuft.

8. Copolymer nach mindestens einem der Ansprüche 3 bis 7, wobei:
(i) das vinylaromatische Monomer Styrol ist, das konjugierte Dienmonomer Butadien ist, Y zweiwertiger Schwefel ist und Z von N-Isopropylacrylamid abgeleitet ist; oder
(ii) das konjugierte Dienmonomer Isopren ist, Y zweiwertiger Schwefel ist, und Z von N-Isopropylacrylamid abgeleitet ist; oder
(iii) das konjugierte Dienmonomer Butadien ist, Y zweiwertiger Schwefel ist, und Z von N-Isopropylacrylamid abgeleitet ist.

9. Luftreifen mit einer Lauffläche, wobei die Lauffläche eine Kautschukzusammensetzung umfasst, umfassend ein Copolymer gemäß mindestens einem der vorhergehenden Ansprüche 3 bis 8.

## Revendications

1. Procédé de préparation d'un copolymère greffé, le procédé comprenant les étapes dans lesquelles :
on obtient un premier polymère comprenant au moins une liaison double de carbone-carbone, le premier polymère dérivant d'au moins un premier monomère, ledit au moins un premier monomère comprenant un monomère diénique conjugué ;
on obtient un deuxième polymère capable de manifester une température critique de solubilité inférieure (LCST) comme déterminé via le procédé décrit dans la partie expérimentale et comprenant un groupe fonctionnel terminal capable de réagir avec la liaison double de carbone-carbone ;
faire réagir le deuxième polymère avec le premier polymère pour obtenir un copolymère greffé, le copolymère greffé comprenant une chaîne principale qui dérive du premier polymère et des chaînes latérales qui dérivent du deuxième polymère ; dans lequel
l'étape consistant à obtenir le deuxième polymère comprend les étapes consistant à ;
polymériser un deuxième monomère en présence d'un agent de transfert de chaîne RAFT comprenant un groupe thiocarbonylthio pour obtenir un polymère comprenant un groupe thiocarbonylthio terminal ; et
cliver le groupe thiocarbonylthio terminal pour obtenir un groupe thiol pour former le deuxième polymère comprenant un groupe thio terminal ; et dans lequel
(i) le deuxième monomère est un dérivé d'acrylamide substitué sur l'atome d'azote ;
(ii) le deuxième monomère répond à la formule : 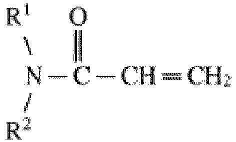 dans laquelle R¹ et R² sont choisis de manière indépendante parmi le groupe constitué par un atome d'hydrogène, un groupe alkyle en C₂-C₆, un groupe alkyle ramifié en C₂-C₆ et un groupe cycloalkyle en C₃-C₆, avec cette exception qu'au moins un des radicaux R¹ et R² ne représente pas un atome d'hydrogène ; ou
(iii) le deuxième monomère est choisi parmi le groupe constitué par le N-isopropylacrylamide, le N-cyclopropylacrylamide et le N,N-diéthylacrylamide.

2. Procédé selon la revendication 1, dans lequel le premier polymère est choisi parmi le groupe constitué par un caoutchouc de polyisoprène, un caoutchouc de polybutadiène et un caoutchouc de styrène-butadiène.

3. Copolymère comprenant la structure : 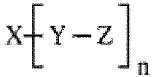 dans laquelle X représente un polymère qui dérive d'un monomère comprenant au moins un monomère diénique conjugué et de manière facultative au moins un monomère vinylaromatique, tel que le styrène ; Z représente un polymère capable de manifester une température critique de solubilité inférieure (LCST) comme déterminé via le procédé décrit dans la partie expérimentale ; Y représente un groupe divalent lié à la fois à X et à Z ; et n représente le nombre de groupes -[-Y-Z] liés à X ; dans lequel
i) Z dérive d'un monomère répondant à la formule : 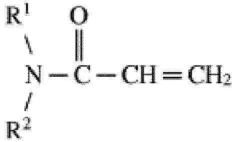 dans laquelle R¹ et R² sont choisis de manière indépendante parmi le groupe constitué par un atome d'hydrogène, un groupe alkyle en C₂-C₆, un groupe alkyle ramifié en C₂-C₆ et un groupe cycloalkyle en C₃-C₆, avec cette exception qu'au moins un des radicaux R¹ et R² ne représente pas un atome d'hydrogène ; ou
(ii) Z est choisi parmi le groupe constitué par le poly(N-isopropylacrylamide), le poly(N-cyclopropylacrylamide) et le poly(N,N-diéthylacrylamide) ; ou
iii) Z répond à la formule : 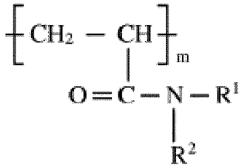 dans laquelle R¹ et R² sont choisis de manière indépendante parmi le groupe constitué par un atome d'hydrogène, un groupe alkyle en C₂-C₆, un groupe alkyle ramifié en C₂-C₆ et un groupe cycloalkyle en C₃-C₆, avec cette exception qu'au moins un des radicaux R¹ et R² ne représente pas un atome d'hydrogène ; et m représente le degré de polymérisation de la chaîne hydrocarbonée.

4. Copolymère selon la revendication 3, dans lequel ledit au moins un monomère diénique conjugué est choisi parmi le groupe constitué par l'isoprène et le butadiène.

5. Copolymère selon la revendication 3 ou 4, dans lequel X est choisi parmi le groupe constitué par un caoutchouc de styrène-butadiène polymérisé en solution, un caoutchouc de styrène-butadiène polymérisé en émulsion, un caoutchouc de polyisoprène naturel et un caoutchouc de polyisoprène synthétique.

6. Copolymère selon la revendication 3, 4 ou 5, dans lequel Y représente un groupe divalent choisi parmi le groupe constitué par un atome de soufre et un atome d'oxygène ; et/ou Z capable de manifester une température critique de solubilité inférieure (LCST) possède un poids moléculaire moyen en poids qui se situe dans la plage de 500 à 20.000 g/gmol, comme déterminé par chromatographie par perméation sur gel dans du diméthylformamide étalonné par rapport à du PMMA.

7. Copolymère selon au moins une des revendications 3 à 6, comprenant le polymère Z à concurrence de 1 à 20 % en poids et/ou dans lequel n représente un nombre qui se situe dans la plage de 2 à 30.

8. Copolymère selon au moins une des revendications 3 à 7, dans lequel
(i) le monomère vinylaromatique est le styrène, le monomère diénique conjugué est le butadiène, Y représente du soufre divalent et Z dérive du N-isopropylacrylamide ; ou
(ii) le monomère vinylaromatique est l'isoprène, Y représente du soufre divalent et Z dérive du N-isopropylacrylamide ; ou
(iii) le monomère vinylaromatique est le butadiène, Y représente du soufre divalent et Z dérive du N-isopropylacrylamide.

9. Bandage pneumatique possédant une bande de roulement, la bande de roulement comprenant une composition de caoutchouc comprenant un copolymère selon au moins une des revendications précédentes 3 à 8.
